# EUROPEAN PATENT APPLICATION

(11) **EP 4 529 232 A1**
(43) Date of publication of application: **26.03.2025**
(21) Application number: 22947291.5
(22) Date of filing: 22.06.2022
(51) Int. Cl.: H04W 4/02

(54) **RANGING METHOD, APPARATUS, AND SYSTEM**

(71) Applicant: Huawei Technologies Co., Ltd., Shenzhen, Guangdong 518129 (CN)
(72) Inventor: LI, Dejian, Shenzhen, Guangdong 518129 (CN); GAO, Lei, Shenzhen, Guangdong 518129 (CN); CHENG, Xingqing, Shenzhen, Guangdong 518129 (CN)
(74) Representative: Huawei European IPR
(86) International application number: PCT/CN2022/100548
(87) International publication number: WO 2023/245514

(57) **Abstract**

This application discloses a ranging method, apparatus, and system, to improve precision of positioning/ranging/angle measurement/sensing performed by a device on a target. A first device sends a first ranging signal and/or receives a second ranging signal over at least one first channel, and a second device receives the first ranging signal and/or sends the second ranging signal over the at least one first channel. The first device and the second device perform frequency hopping for at least one time based on a frequency hopping parameter. The first device sends a third ranging signal and/or receives a fourth ranging signal over at least one second channel, and the second device receives the third ranging signal and/or sends the fourth ranging signal over the at least one second channel. The first device and the second device each perform frequency hopping for at least one time based on the same frequency hopping parameter, to synchronously perform signal measurement over different channels for a plurality of times in a preset order. This further implements technical effect of performing measurement by combining large-bandwidth signals of a plurality of channels, and improves ranging resolution and ranging accuracy.

## Description

### TECHNICAL FIELD

This application relates to the field of wireless communication technologies, and in particular, to a ranging method, apparatus, and system.

### BACKGROUND

With continuous development of global communication technologies, wireless communication technologies have surpassed wired communication technologies in terms of development speed and application, and present a booming development trend. Smart devices such as smart transportation devices, smart home devices, and robots are gradually entering daily life of people. Based on the wireless communication technologies, the device can perform positioning/ranging/angle measurement/sensing and the like on a target. For example, passive entry passive start (passive entry passive start, PEPS) is an example of vehicle-mounted wireless positioning application. A user does not need to use a key, and uses a vehicle-mounted positioning system to position a car key/mobile phone carried by the user, to automatically lock or unlock a car door.

However, in the conventional technology, when the device performs positioning/ranging/angle measurement/sensing on the target, an available bandwidth is small, resulting in poor precision of positioning/ranging/angle measurement/sensing.

### SUMMARY

This application provides a ranging method, apparatus, and system, to improve precision of positioning/ranging/angle measurement/sensing performed by a device on a target.

According to a first aspect, a ranging method is provided. The method may be applied to any wireless communication scenario, for example, a vehicle-mounted positioning/ranging/angle measurement/sensing scenario and an indoor positioning/ranging/angle measurement/sensing scenario. The method includes: A first device sends a first ranging signal and/or receives a second ranging signal over at least one first channel; performs frequency hopping for at least one time based on a frequency hopping parameter; and sends a third ranging signal and/or receives a fourth ranging signal over at least one second channel.

In the foregoing solution, the first device performs frequency hopping for at least one time based on the frequency hopping parameter, to perform signal measurement over different channels for a plurality of times in a preset order. This further implements technical effect of performing measurement by combining large-bandwidth signals of a plurality of channels (a bandwidth of signal measurement is total bandwidths of the at least one first channel and the at least one second channel), and improves ranging resolution and ranging accuracy. In addition, provided that a second device performs frequency hopping for at least one time based on the same frequency hopping parameter, it can be ensured that the first device and the second device synchronously perform frequency hopping, to avoid problems such as a large frequency hopping parameter difference between different devices, and difficulty in synchronizing frequency hopping without a synchronization protocol.

It may be understood that when the first device sends and/or receives ranging signals over a plurality of channels, the plurality of channels may be considered as one channel group. For example, when the at least one first channel includes a plurality of channels, the at least one first channel may be referred to as a first channel group, and when the at least one second channel includes a plurality of channels, the at least one second channel may be referred to as a second channel group.

In a possible design, the first ranging signal, the second ranging signal, the third ranging signal, and/or the fourth ranging signal is an orthogonal frequency division multiplexing (orthogonal frequency division multiplexing, OFDM) signal.

In other words, in an OFDM signal-based ranging scenario, in embodiments of this application, technical effect of performing measurement by combining large-bandwidth OFDM signals of a plurality of channels may be achieved through frequency hopping. Signal measurement parties (the first device and the second device) use the same frequency hopping parameter to resolve problems such as a large frequency hopping parameter difference between different devices, and difficulty in synchronizing frequency hopping without a synchronization protocol. Therefore, this can improve resolution and accuracy of OFDM signal-based ranging.

In a possible design, the OFDM signal includes at least one of the following signals: a channel state information reference signal (channel state information reference signal, CSI-RS), a sounding reference signal (sounding reference signal, SRS), a first training signal (first training signal, FTS), a second training signal (second training signal, STS), and a positioning reference signal (positioning reference signal, PRS).

It may be understood that the several types of signals are merely examples rather than specific limitations.

In a possible design, the frequency hopping parameter includes one or more of the following: first frequency hopping stable duration; a first maximum listen-before-talk (Listen-Before-Talk, LBT) window period; and a first frequency hopping pattern that indicates a frequency hopping order of the first device and the second device. The first frequency hopping pattern includes channel number information of the at least one first channel and channel number information of the at least one second channel.

In this design, the first frequency hopping stable duration is set, so that the first device and the second device can synchronize statuses (for example, synchronously entering an LBT phase) in a frequency hopping process. The first maximum LBT window period is set, so that it can be ensured that when a channel is busy for a long time, the first device and the second device synchronously switch to a next-hop channel when the first maximum LBT window period ends. This can avoid repeated clear channel assessment due to long-time contention for a channel, save resources, reduce device power consumption, and improve frequency hopping measurement efficiency. The first frequency hopping pattern is set, so that it can be ensured that the first device and the second device perform frequency hopping in the same frequency hopping order, and frequency hopping synchronization between the ranging parties is further ensured.

It may be understood that during actual application, there may be another frequency hopping parameter. This is not limited in this application.

In a possible design, when the first device performs frequency hopping in different frequency bands (for example, 2.1 GHz, 5.1 GHz, and 5.8 GHz), the first frequency hopping stable duration may be different. For example, the at least one channel belongs to a first frequency band, and the first frequency hopping stable duration is first duration; or the at least one channel belongs to a second frequency band, and the first frequency hopping stable duration is second duration. The first frequency band is different from the second frequency band, the first frequency band and the second frequency band do not overlap in frequency domain, and the first duration is different from the second duration.

A value of the first frequency hopping stable duration is related to whether clear channel assessment needs to be performed when the device performs frequency hopping in a corresponding frequency band. For example, when the first device performs frequency hopping in different frequency bands, the first frequency hopping stable duration in which clear channel assessment needs to be performed is less than the first frequency hopping stable duration in which a ranging signal is directly transmitted (that is, clear channel assessment does not need to be performed).

In this way, the first device uses different first frequency hopping stable duration when performing frequency hopping in different frequency bands, so that frequency hopping waiting duration of the first device can be reduced as much as possible. This can improve frequency hopping ranging efficiency, and reduce power consumption.

In a possible design, when the first device performs frequency hopping over different channels (groups), the first frequency hopping stable duration may be different. Similarly, when the first device performs frequency hopping over different channels (groups), the first frequency hopping stable duration in which clear channel assessment needs to be performed is less than the first frequency hopping stable duration in which a ranging signal is directly transmitted (that is, clear channel assessment does not need to be performed).

In this way, the first device uses different first frequency hopping stable duration when performing frequency hopping over different channels (groups), so that frequency hopping waiting duration of the first device can be reduced as much as possible. This can improve frequency hopping ranging efficiency, and reduce power consumption.

In a possible design, the first maximum LBT window period is configured by the first device. For example, when the first device is a primary node, and the second device is a secondary node, the first maximum LBT window period is configured by the first device.

In this way, the first device can manage signal measurement processes of the first device and the second device, to improve reliability of the solution.

In a possible design, the first frequency hopping stable duration is a larger value of frequency hopping stable duration of the first device and frequency hopping stable duration of the second device, and the frequency hopping stable duration is duration of a stable state by a device when performing frequency hopping.

In this way, it can be ensured that both the first device and the second device enter a stable state when the first frequency hopping stable duration ends, and reliability of frequency hopping ranging is ensured.

In a possible design, the first frequency hopping pattern is determined through negotiation between the first device and the second device.

In this way, the first frequency hopping pattern can be supported by the first device and the second device, to ensure a synchronization status of frequency hopping ranging between the first device and the second device, and enhance ranging reliability.

In a possible design, the at least one second channel includes a plurality of channels, and the channel number information of the at least one second channel is channel number information of a channel with a lowest frequency or a highest frequency in the at least one second channel.

In this way, an amount of information required for transmitting the first frequency hopping pattern can be reduced, and system resources can be saved.

In a possible design, that the first device performs frequency hopping for at least one time based on a frequency hopping parameter includes: The first device switches from the at least one first channel to the at least one second channel based on the first frequency hopping pattern; and performs first clear channel assessment after waiting for the first frequency hopping stable duration. Correspondingly, that the first device sends a third ranging signal and/or receives a fourth ranging signal over at least one second channel includes: When determining that the at least one second channel is idle, the first device sends the third ranging signal and/or receives the fourth ranging signal over the at least one second channel.

In other words, the first device may switch to the second channel by performing frequency hopping for one time.

In a possible design, the first frequency hopping pattern further includes channel number information of at least one third channel. That the first device performs frequency hopping for at least one time based on a frequency hopping parameter includes: The first device switches from the at least one first channel to the at least one third channel based on the first frequency hopping pattern; performs second clear channel assessment after waiting for the first frequency hopping stable duration; when determining that a clear channel assessment result obtained in an LBT window corresponding to the second clear channel assessment is that the at least one third channel is not idle, after the LBT window corresponding to the second clear channel assessment ends, switches from the at least one third channel to the at least one second channel based on the first frequency hopping pattern, where duration of the LBT window corresponding to the second clear channel assessment is equal to the first maximum LBT window period; and performs third clear channel assessment after waiting for the first frequency hopping stable duration. Correspondingly, that the first device sends a third ranging signal and/or receives a fourth ranging signal over at least one second channel includes: When determining that the at least one second channel is idle, the first device sends the third ranging signal and/or receives the fourth ranging signal over the at least one second channel.

In other words, the first device switches to the second channel only after continuously performing frequency hopping for two times (after the first time of switching, LBT fails, and consequently signal measurement cannot be performed over the third channel).

It is clear that, during actual application, the first device may alternatively perform frequency hopping for more times before LBT succeeds, to transmit the ranging signal over a channel on which the LBT succeeds.

In a possible design, the method further includes: The first device sends frequency hopping measurement information of the first device to the second device; and/or receives frequency hopping measurement information of the second device.

In this way, the two signal measurement parties can learn of the frequency hopping measurement information of each other, to determine the frequency hopping parameter based on the frequency hopping measurement information. It is ensured that the finally determined frequency hopping parameter can be supported by the two parties, to improve ranging reliability.

In a possible design, the frequency hopping measurement information of the first device includes one or more of the following:
first information that indicates whether the first device allows channel overlapping;
second information that indicates a quantity of overlapped channels allowed by the first device;
third information that indicates a second frequency hopping pattern expected by the first device;
fourth information that indicates frequency hopping stable duration of the first device; and
fifth information that indicates a second maximum LBT window period expected by the first device.

The frequency hopping measurement information of the second device includes one or more of the following:
sixth information that indicates whether the second device allows channel overlapping;
seventh information that indicates a quantity of overlapped channels allowed by the second device;
eighth information that indicates a third frequency hopping pattern expected by the second device;
ninth information that indicates frequency hopping stable duration of the second device; and
tenth information that indicates a third maximum LBT window period expected by the second device.

It clear that the foregoing information is merely an example rather than a specific limitation.

In a possible design, the method further includes: The first device determines the frequency hopping measurement information of the first device. The frequency hopping measurement information is determined based on frequency hopping capability information of the first device, frequency hopping capability information of the second device, or pre-configured or pre-defined frequency hopping capability information.

In this way, it can be ensured that the frequency hopping measurement information, of the first device, used in a frequency hopping parameter negotiation process can be supported by a frequency hopping capability of the first device, and the frequency hopping measurement information of the second device can be supported by a frequency hopping capability of the second device, to improve reliability of a ranging solution.

In a possible design, the method further includes: The first device sends the frequency hopping capability information of the first device to the second device; and/or receives the frequency hopping capability information of the second device.

In this way, it can be ensured that the first device and the second device can accurately obtain the frequency hopping capability information of each other, to improve applicability of the solution.

In a possible design, the frequency hopping capability information of the first device includes one or more of the following:
whether the first device supports frequency hopping;
information about a frequency band that is supported by the first device and that is used for frequency hopping;
a maximum bandwidth that is supported by the first device and that is used to send and/or receive a ranging signal;
preset stable duration in which the first device performs frequency hopping; and
whether the preset stable duration in which the first device performs frequency hopping is different in different frequency bands.

The frequency hopping capability information of the second device includes one or more of the following:
whether the second device supports frequency hopping;
information about a frequency band that is supported by the second device and that is used for frequency hopping;
a maximum bandwidth that is supported by the second device and that is used to send and/or receive a ranging signal;
preset stable duration in which the second device performs frequency hopping; and
whether the preset stable duration in which the second device performs frequency hopping is different in different frequency bands.

It clear that the foregoing information is merely an example rather than a specific limitation.

In a possible design, the first frequency hopping pattern further includes channel number information of an initial operating channel. The method further includes: The first device starts frequency hopping from the initial operating channel, where a last-hop channel indicated by the first frequency hopping pattern is the initial operating channel.

In this way, on one hand, it can be ensured that the device performs ranging over different channels in the signal measurement process, to implement large-bandwidth measurement effect. On the other hand, it can be ensured that the device returns to the initial operating channel after the ranging is completed, to ensure subsequent communication performance of the device.

According to a second aspect, a ranging method is provided. The method may be applied to any wireless communication scenario, for example, a vehicle-mounted positioning/ranging/angle measurement/sensing scenario and an indoor positioning/ranging/angle measurement/sensing scenario. The method includes: A second device receives a first ranging signal and/or sends a second ranging signal over at least one first channel; performs frequency hopping for at least one time based on a frequency hopping parameter; and receives a third ranging signal and/or sends a fourth ranging signal over at least one second channel.

In a possible design, the first ranging signal, the second ranging signal, the third ranging signal, and/or the fourth ranging signal is an OFDM signal.

In a possible design, the OFDM signal includes at least one of the following signals: a CSI-RS, an SRS, an FTS, an STS, and a PRS.

In a possible design, the frequency hopping parameter includes one or more of the following:
first frequency hopping stable duration;
a first maximum LBT window period; and
a first frequency hopping pattern that indicates a frequency hopping order of a first device and the second device, where the first frequency hopping pattern includes channel number information of the at least one first channel and channel number information of the at least one second channel.

In a possible design, the at least one channel belongs to a first frequency band, and the first frequency hopping stable duration is first duration; or the at least one channel belongs to a second frequency band, and the first frequency hopping stable duration is second duration. The first frequency band is different from the second frequency band, the first frequency band and the second frequency band do not overlap in frequency domain, and the first duration is different from the second duration.

In a possible design, the first maximum LBT window period is configured by the first device.

In a possible design, the first frequency hopping stable duration is a larger value of frequency hopping stable duration of the first device and frequency hopping stable duration of the second device, and the frequency hopping stable duration is duration of a stable state by a device when performing frequency hopping.

In a possible design, the first frequency hopping pattern is determined through negotiation between the first device and the second device.

In a possible design, the at least one second channel includes a plurality of channels, and the channel number information of the at least one second channel is channel number information of a channel with a lowest frequency or a highest frequency in the at least one second channel.

In a possible design, that the first device performs frequency hopping for at least one time based on a frequency hopping parameter includes: The first device switches from the at least one first channel to the at least one second channel based on the first frequency hopping pattern; and performs fourth clear channel assessment after waiting for the first frequency hopping stable duration. Correspondingly, that the second device receives a third ranging signal and/or sends a fourth ranging signal over at least one second channel includes: When determining that the at least one second channel is idle, the second device receives the third ranging signal and/or sends the fourth ranging signal over the at least one second channel.

In other words, the first device can switch to the second channel by performing frequency hopping for one time.

In a possible design, the first frequency hopping pattern further includes channel number information of at least one third channel. That the second device performs frequency hopping for at least one time based on a frequency hopping parameter includes: The second device switches from the at least one first channel to the at least one third channel based on the first frequency hopping pattern; performs fifth clear channel assessment after waiting for the first frequency hopping stable duration; when determining that a clear channel assessment result obtained in an LBT window corresponding to the fifth clear channel assessment is that the at least one third channel is not idle, after the LBT window corresponding to the fifth clear channel assessment ends, switches from the at least one third channel to the at least one second channel based on the first frequency hopping pattern, where duration of the LBT window corresponding to the fifth clear channel assessment is equal to the first maximum LBT window period; and performs sixth clear channel assessment after waiting for the first frequency hopping stable duration. Correspondingly, that the second device receives a third ranging signal and/or sends a fourth ranging signal over at least one second channel includes: When determining that the at least one second channel is idle, the second device receives the third ranging signal and/or sends the fourth ranging signal over the at least one second channel.

In a possible design, the method further includes: The second device receives frequency hopping measurement information of the first device; and/or sends frequency hopping measurement information of the second device to the first device.

In a possible design, the frequency hopping measurement information of the first device includes one or more of the following:
first information that indicates whether the first device allows channel overlapping;
second information that indicates a quantity of overlapped channels allowed by the first device;
third information that indicates a second frequency hopping pattern expected by the first device;
fourth information that indicates frequency hopping stable duration of the first device; and
fifth information that indicates a second maximum LBT window period expected by the first device.

The frequency hopping measurement information of the second device includes one or more of the following:
sixth information that indicates whether the second device allows channel overlapping;
seventh information that indicates a quantity of overlapped channels allowed by the second device;
eighth information that indicates a third frequency hopping pattern expected by the second device;
ninth information that indicates frequency hopping stable duration of the second device; and
tenth information that indicates a third maximum LBT window period expected by the second device.

In a possible design, the method further includes: The second device determines the frequency hopping measurement information of the second device. The frequency hopping measurement information is determined based on frequency hopping capability information of the first device, frequency hopping capability information of the second device, or pre-configured or pre-defined frequency hopping capability information.

In a possible design, the method further includes: The second device sends the frequency hopping capability information of the second device to the first device; and/or receives the frequency hopping capability information of the first device.

In a possible design, the frequency hopping capability information of the first device includes one or more of the following:
whether the first device supports frequency hopping;
information about a frequency band that is supported by the first device and that is used for frequency hopping;
a maximum bandwidth that is supported by the first device and that is used to send and/or receive a ranging signal;
preset stable duration in which the first device performs frequency hopping; and
whether the preset stable duration in which the first device performs frequency hopping is different in different frequency bands.

The frequency hopping capability information of the second device includes one or more of the following:
whether the second device supports frequency hopping;
information about a frequency band that is supported by the second device and that is used for frequency hopping;
a maximum bandwidth that is supported by the second device and that is used to send and/or receive a ranging signal;
preset stable duration in which the second device performs frequency hopping; and
whether the preset stable duration in which the second device performs frequency hopping is different in different frequency bands.

In a possible design, the first frequency hopping pattern further includes channel number information of an initial operating channel. The method further includes: The second device starts frequency hopping from the initial operating channel, where a last-hop channel indicated by the first frequency hopping pattern is the initial operating channel.

According to a third aspect, a ranging apparatus is provided. The apparatus may be a first device or a chip in a first device, and the apparatus includes a unit/module/technical means configured to implement the method in any one of the first aspect or the possible designs of the first aspect.

For example, the apparatus may include:
a transceiver unit, configured to send a first ranging signal and/or receive a second ranging signal over at least one first channel; and
a processing unit, configured to perform frequency hopping for at least one time based on a frequency hopping parameter.

The transceiver unit is further configured to send a third ranging signal and/or receive a fourth ranging signal over at least one second channel.

Optionally, the first ranging signal, the second ranging signal, the third ranging signal, and/or the fourth ranging signal is an orthogonal frequency division multiplexing OFDM signal.

Optionally, the OFDM signal includes at least one of the following signals: a CSI-RS, an SRS, an FTS, an STS, and a PRS.

Optionally, the frequency hopping parameter includes one or more of the following:
first frequency hopping stable duration;
a first maximum LBT window period; and
a first frequency hopping pattern that indicates a frequency hopping order of the apparatus and a second device, where the first frequency hopping pattern includes channel number information of the at least one first channel and channel number information of the at least one second channel.

Optionally, the at least one channel belongs to a first frequency band, and the first frequency hopping stable duration is first duration; or the at least one channel belongs to a second frequency band, and the first frequency hopping stable duration is second duration. The first frequency band is different from the second frequency band, the first frequency band and the second frequency band do not overlap in frequency domain, and the first duration is different from the second duration.

Optionally, the first maximum LBT window period is configured by the apparatus.

Optionally, the first frequency hopping stable duration is a larger value of frequency hopping stable duration of the apparatus and frequency hopping stable duration of the second device, and the frequency hopping stable duration is duration of a stable state by a device when performing frequency hopping.

Optionally, the first frequency hopping pattern is determined through negotiation between the apparatus and the second device.

Optionally, the at least one second channel includes a plurality of channels, and the channel number information of the at least one second channel is channel number information of a channel with a lowest frequency or a highest frequency in the at least one second channel.

Optionally, the processing unit is specifically configured to: switch from the at least one first channel to the at least one second channel based on the first frequency hopping pattern; and perform first clear channel assessment after waiting for the first frequency hopping stable duration. When sending the third ranging signal and/or receiving the fourth ranging signal over the at least one second channel, the transceiver unit is specifically configured to: when the at least one second channel is idle, send the third ranging signal and/or receive the fourth ranging signal over the at least one second channel.

Optionally, the first frequency hopping pattern further includes channel number information of at least one third channel. The processing unit is specifically configured to: switch from the at least one first channel to the at least one third channel based on the first frequency hopping pattern; perform second clear channel assessment after waiting for the first frequency hopping stable duration; when a clear channel assessment result obtained in an LBT window corresponding to the second clear channel assessment is that the at least one third channel is not idle, after the LBT window corresponding to the second clear channel assessment ends, switch from the at least one third channel to the at least one second channel based on the first frequency hopping pattern, where duration of the LBT window corresponding to the second clear channel assessment is equal to the first maximum LBT window period; and perform third clear channel assessment after waiting for the first frequency hopping stable duration. When sending the third ranging signal and/or receiving the fourth ranging signal over the at least one second channel, the transceiver unit is specifically configured to: when the at least one second channel is idle, send the third ranging signal and/or receive the fourth ranging signal over the at least one second channel.

Optionally, the transceiver unit is further configured to: send frequency hopping measurement information of the apparatus to the second device; and/or receive frequency hopping measurement information of the second device.

Optionally, the frequency hopping measurement information of the apparatus includes one or more of the following:
first information that indicates whether the apparatus allows channel overlapping;
second information that indicates a quantity of overlapped channels allowed by the apparatus;
third information that indicates a second frequency hopping pattern expected by the apparatus,
fourth information that indicates frequency hopping stable duration of the apparatus; and
fifth information that indicates a second maximum LBT window period expected by the apparatus.

The frequency hopping measurement information of the second device includes one or more of the following:
sixth information that indicates whether the second device allows channel overlapping;
seventh information that indicates a quantity of overlapped channels allowed by the second device;
eighth information that indicates a third frequency hopping pattern expected by the second device;
ninth information that indicates frequency hopping stable duration of the second device; and
tenth information that indicates a third maximum LBT window period expected by the second device.

Optionally, the processing unit is further configured to determine the frequency hopping measurement information of the apparatus. The frequency hopping measurement information is determined based on frequency hopping capability information of the apparatus, frequency hopping capability information of the second device, or pre-configured or pre-defined frequency hopping capability information.

Optionally, the transceiver unit is further configured to: send the frequency hopping capability information of the apparatus to the second device; and/or receive the frequency hopping capability information of the second device.

Optionally, the frequency hopping capability information of the apparatus includes one or more of the following:
whether the apparatus supports frequency hopping;
information about a frequency band that is supported by the apparatus and that is used for frequency hopping;
a maximum bandwidth that is supported by the apparatus and that is used to send and/or receive a ranging signal;
preset stable duration in which the apparatus performs frequency hopping; and
whether the preset stable duration in which the apparatus performs frequency hopping is different in different frequency bands.

The frequency hopping capability information of the second device includes one or more of the following:
whether the second device supports frequency hopping;
information about a frequency band that is supported by the second device and that is used for frequency hopping;
a maximum bandwidth that is supported by the second device and that is used to send and/or receive a ranging signal;
preset stable duration in which the second device performs frequency hopping; and
whether the preset stable duration in which the second device performs frequency hopping is different in different frequency bands.

Optionally, the first frequency hopping pattern further includes channel number information of an initial operating channel. The processing unit is further configured to start frequency hopping from the initial operating channel, where a last-hop channel indicated by the first frequency hopping pattern is the initial operating channel.

According to a fourth aspect, a ranging apparatus is provided. The apparatus may be a second device or a chip in a second device, and the apparatus includes a unit/module/technical means configured to implement the method in any one of the second aspect or the possible designs of the second aspect.

For example, the apparatus may include: a transceiver unit, configured to receive a first ranging signal and/or send a second ranging signal over at least one first channel; and a processing unit, configured to perform frequency hopping for at least one time based on a frequency hopping parameter. The transceiver unit is further configured to receive a third ranging signal and/or send a fourth ranging signal over at least one second channel.

Optionally, the first ranging signal, the second ranging signal, the third ranging signal, and/or the fourth ranging signal is an OFDM signal.

Optionally, the OFDM signal includes at least one of the following signals: a CSI-RS, an SRS, an FTS, an STS, and a PRS.

Optionally, the frequency hopping parameter includes one or more of the following:
first frequency hopping stable duration;
a first maximum LBT window period; and
a first frequency hopping pattern that indicates a frequency hopping order of a first device and the apparatus, where the first frequency hopping pattern includes channel number information of the at least one first channel and channel number information of the at least one second channel.

Optionally, the at least one channel belongs to a first frequency band, and the first frequency hopping stable duration is first duration; or the at least one channel belongs to a second frequency band, and the first frequency hopping stable duration is second duration. The first frequency band is different from the second frequency band, the first frequency band and the second frequency band do not overlap in frequency domain, and the first duration is different from the second duration.

Optionally, the first maximum LBT window period is configured by the first device.

Optionally, the first frequency hopping stable duration is a larger value of frequency hopping stable duration of the first device and frequency hopping stable duration of the apparatus, and the frequency hopping stable duration is duration of a stable state by a device when performing frequency hopping.

Optionally, the first frequency hopping pattern is determined through negotiation between the first device and the apparatus.

Optionally, the at least one second channel includes a plurality of channels, and the channel number information of the at least one second channel is channel number information of a channel with a lowest frequency or a highest frequency in the at least one second channel.

Optionally, the processing unit is specifically configured to: switch from the at least one first channel to the at least one second channel based on the first frequency hopping pattern; and perform fourth clear channel assessment after waiting for the first frequency hopping stable duration. Correspondingly, when receiving the third ranging signal and/or sending the fourth ranging signal over the at least one second channel, the transceiver unit is specifically configured to: when the at least one second channel is idle, receive the third ranging signal and/or send the fourth ranging signal over the at least one second channel.

Optionally, the first frequency hopping pattern further includes channel number information of at least one third channel. The processing unit is specifically configured to: switch from the at least one first channel to the at least one third channel based on the first frequency hopping pattern; perform fifth clear channel assessment after waiting for the first frequency hopping stable duration; when determining that a clear channel assessment result obtained in an LBT window corresponding to the fifth clear channel assessment is that the at least one third channel is not idle, after the LBT window corresponding to the fifth clear channel assessment ends, switch from the at least one third channel to the at least one second channel based on the first frequency hopping pattern, where duration of the LBT window corresponding to the fifth clear channel assessment is equal to the first maximum LBT window period; and perform sixth clear channel assessment after waiting for the first frequency hopping stable duration. Correspondingly, when receiving the third ranging signal and/or sending the fourth ranging signal over the at least one second channel, the transceiver unit is specifically configured to: when the at least one second channel is idle, receive the third ranging signal and/or send the fourth ranging signal over the at least one second channel.

Optionally, the transceiver unit is further configured to: receive frequency hopping measurement information of the first device; and/or send frequency hopping measurement information of the apparatus to the first device.

Optionally, the frequency hopping measurement information of the first device includes one or more of the following:
first information that indicates whether the first device allows channel overlapping;
second information that indicates a quantity of overlapped channels allowed by the first device;
third information that indicates a second frequency hopping pattern expected by the first device;
fourth information that indicates frequency hopping stable duration of the first device; and
fifth information that indicates a second maximum LBT window period expected by the first device.

The frequency hopping measurement information of the apparatus includes one or more of the following:
sixth information that indicates whether the apparatus allows channel overlapping;
seventh information that indicates a quantity of overlapped channels allowed by the apparatus;
eighth information that indicates a third frequency hopping pattern expected by the apparatus;
ninth information that indicates frequency hopping stable duration of the apparatus; and
tenth information that indicates a third maximum LBT window period expected by the apparatus.

Optionally, the processing unit is further configured to determine the frequency hopping measurement information of the apparatus. The frequency hopping measurement information is determined based on frequency hopping capability information of the first device, frequency hopping capability information of the apparatus, or pre-configured or pre-defined frequency hopping capability information.

Optionally, the transceiver unit is further configured to: send the frequency hopping capability information of the apparatus to the first device; and/or receive the frequency hopping capability information of the first device.

Optionally, the frequency hopping capability information of the first device includes one or more of the following:
whether the first device supports frequency hopping;
information about a frequency band that is supported by the first device and that is used for frequency hopping;
a maximum bandwidth that is supported by the first device and that is used to send and/or receive a ranging signal;
preset stable duration in which the first device performs frequency hopping; and
whether the preset stable duration in which the first device performs frequency hopping is different in different frequency bands.

The frequency hopping capability information of the apparatus includes one or more of the following:
whether the apparatus supports frequency hopping;
information about a frequency band that is supported by the apparatus and that is used for frequency hopping;
a maximum bandwidth that is supported by the apparatus and that is used to send and/or receive a ranging signal;
preset stable duration in which the apparatus performs frequency hopping; and
whether the preset stable duration in which the apparatus performs frequency hopping is different in different frequency bands.

Optionally, the first frequency hopping pattern further includes channel number information of an initial operating channel. The transceiver unit is further configured to start frequency hopping from the initial operating channel, where a last-hop channel indicated by the first frequency hopping pattern is the initial operating channel.

According to a fifth aspect, a ranging apparatus is provided, and includes at least one processor and an interface circuit. The interface circuit is configured to: receive a signal from another apparatus other than the apparatus and send or receive the signal to the processor, or send a signal from the processor to another apparatus other than the apparatus, and the processor is configured to implement the method in any one of the first aspect or the possible designs of the first aspect or the method in any one of the second aspect or the possible designs of the second aspect by using a logic circuit or executing code instructions.

According to a sixth aspect, a computer-readable storage medium is provided. The storage medium stores a computer program or instructions, and when the computer program or the instructions are executed by a communication apparatus, the method in any one of the first aspect or the possible designs of the first aspect or the method in any one of the second aspect or the possible designs of the second aspect is implemented.

According to a seventh aspect, a computer program product is provided. The computer program product stores instructions, when the computer program product runs on a computer, the computer is enabled to perform the method in any one of the first aspect or the possible designs of the first aspect or the method in any one of the second aspect or the possible designs of the second aspect.

According to an eighth aspect, a ranging system is provided, and includes:
a first device, configured to perform the method in any one of the first aspect or the possible designs of the first aspect; and
a second device, configured to perform the method in any one of the second aspect or the possible designs of the second aspect.

For beneficial effect of the second aspect to the eighth aspect, specifically refer to technical effect that can be achieved by corresponding designs in the first aspect. Details are not described herein again.

### BRIEF DESCRIPTION OF DRAWINGS

FIG. 1 is a diagram of a possible application scenario according to an embodiment of this application;
FIG. 2 is a flowchart of a ranging method according to an embodiment of this application;
FIG. 3 is a diagram of ranging signal interaction on a channel (group);
FIG. 4A and FIG. 4B are diagrams of negotiating a frequency hopping parameter by a first device and a second device;
FIG. 5 is a diagram of possible frequency hopping according to an embodiment of this application;
FIG. 6 is a diagram of other possible frequency hopping according to an embodiment of this application;
FIG. 7 is a diagram of a simulation result of frequency hopping ranging that is performed based on an OFDM signal with a 20 MHz bandwidth;
FIG. 8 is a diagram of a structure of a ranging apparatus according to an embodiment of this application; and
FIG. 9 is a diagram of a structure of another ranging apparatus according to an embodiment of this application.

### DESCRIPTION OF EMBODIMENTS

Technical solutions provided in embodiments of this application may be applied to various wireless communication scenarios such as a vehicle-mounted positioning/ranging/angle measurement/sensing scenario and an indoor positioning/ranging/angle measurement/sensing scenario, another wide area wireless communication scenario, or a local area wireless communication scenario. This is not limited in this application. A specific wireless communication technology includes but is not limited to wireless fidelity (Wi-Fi), Bluetooth, Bluetooth low energy (BLE), ultra-wideband (ultra-wideband, UWB), sparklink (sparklink), and the like.

It may be understood that in embodiments of this application, similar steps are performed to implement positioning, ranging, angle measurement, sensing, and the like. Therefore, any one of the terms may be used to represent "positioning", "ranging", "angle measurement", "sensing", and the like.

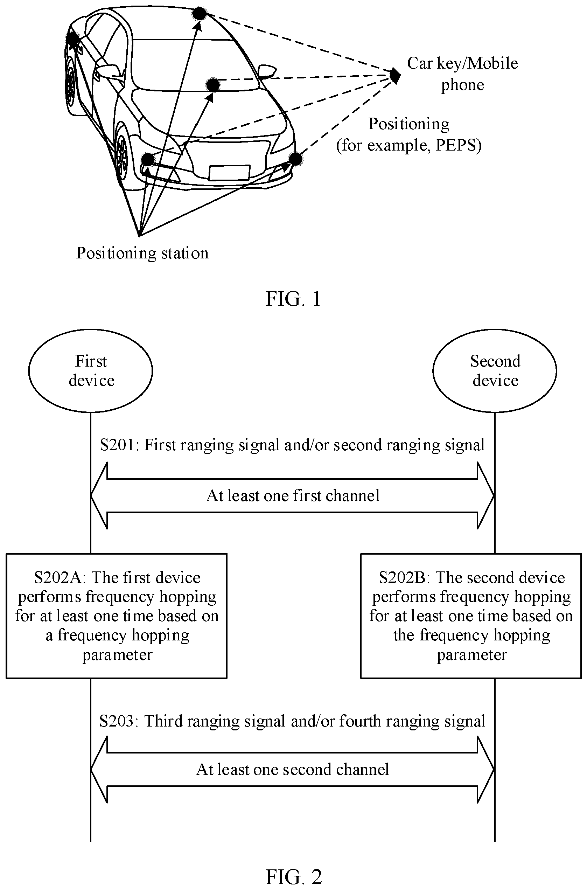

FIG. 1 is a diagram of a possible application scenario according to an embodiment of this application. In a vehicle-mounted positioning scenario, positioning stations are deployed at four corners on an outer surface of a vehicle, and at least one positioning station is deployed inside the vehicle (for example, a rear-view mirror inside the vehicle or an automobile roof inside the vehicle). A car key is a target (namely, a positioned device) that needs to be positioned. A specific implementation of the car key may be a conventional car key with a positioning function, a mobile phone/wearable device with a positioning function, or the like. The positioning station and/or the car key may send and/or receive a ranging signal, and measure the received ranging signal, to obtain a corresponding measurement quantity. Location information (for example, a distance relative to the vehicle) of the car key may be obtained by calculating the measurement quantity obtained by the positioning station and/or the car key.

In a wireless communication scenario, a specific communication area or range may include a plurality of communication domains. The communication domain is a system including a group of communication nodes having a communication relationship and a communication connection relationship (namely, a communication link) between the communication nodes. One communication domain includes one primary communication node (which may be referred to as a primary node or a G node) and at least one secondary communication node (which may be referred to as a secondary node or a T node). The primary node is also referred to as a grant node, is responsible for managing a time-frequency resource of the communication domain, and has a function of scheduling a resource for communication between or positioning of communication nodes in the communication domain.

The scenario shown in FIG. 1 is used as an example. The positioning station, the car key, and the like may form a communication domain. The car key may be a primary node (G node), and each positioning station is a secondary node (T node); or one positioning station is a primary node, and another positioning station and the car key are secondary nodes. This is not limited in this application.

It may be understood that the scenario shown in FIG. 1 is merely an example. During actual application, embodiments of this application may be further applied to another wireless communication scenario.

FIG. 2 is a flowchart of a ranging method according to an embodiment of this application. The method includes the following steps:
S201: A first device sends a first ranging signal and/or receives a second ranging signal over at least one first channel, and correspondingly, a second device receives the first ranging signal and/or sends the second ranging signal over the at least one first channel.

In a possible design, either the first device or the second device is a G node, and the other device is a T node. The G node is responsible for scheduling a time-frequency resource for ranging interaction between the G node and the T node. The T node is scheduled by the G node to perform ranging interaction (for example, sending and/or receiving a ranging signal) with the G node. During specific implementation, a ranging initiator (namely, a node that initiates a ranging procedure between the G node and the T node) may be the G node, and a responder may be the T node; or an initiator is the T node, and a responder is the G node. This is not limited in this application. The scenario shown in FIG. 1 is used as an example. The G node is the car key, and the T node is the positioning station. The first device is the positioning station, and the second device is the car key; or the first device is the car key, and the second device is the positioning station. For ease of description, the following mainly uses the G node and the T node as an example for description. Actually, a specific node type is not limited, provided that the solutions of this application can be implemented.

In embodiments of this application, the first device and/or the second device may perform signal measurement on the received ranging signal.

In a possible design, signal measurement may be specifically one-way ranging (which is also referred to as one-way ranging). For example, the second device receives and measures the first ranging signal sent by the first device, or the first device receives and measures the second ranging signal sent by the second device.

In another possible design, signal measurement may be specifically two-way ranging (which is also referred to as two-way ranging), that is, the second device receives and measures the first ranging signal sent by the first device, and the first device receives and measures the second ranging signal sent by the second device. Two-way ranging can eliminate problems such as a timing offset and a random initial phase that are of the first device and the second device and that are caused by frequency hopping, to coherently combine ranging signals in all frequency bands and/or channels in frequency domain. This can improve ranging resolution through measurement by using a combined large-bandwidth, and further improve ranging accuracy.

Correspondingly, the second device performs signal measurement on the first ranging signal, to obtain a first measurement quantity; and/or the first device performs signal measurement on the second ranging signal, to obtain a second measurement quantity.

In some possible embodiments, performing signal measurement on the ranging signal may also be described as measuring a channel that carries the ranging signal. For example, the first ranging signal and/or the second ranging signal is carried on the at least one first channel. Therefore, performing signal measurement on the first ranging signal and/or the second ranging signal may also be described as performing measurement over the at least one first channel. Correspondingly, the measurement quantity of the ranging signal may also be described as a measurement quantity of a corresponding channel, for example, channel state information in time domain or frequency domain, namely, time of arrival (TOA)/time of departure (TOD) in time domain, or a complex-value frequency response of a carrier/subcarrier corresponding to frequency domain.

It may be understood that when the at least one first channel includes a plurality of channels, the at least one first channel may be considered as one channel group, for example, a first channel group.

S202A: The first device performs frequency hopping for at least one time based on a frequency hopping parameter. S202B: The second device performs frequency hopping for at least one time based on the frequency hopping parameter.

Frequency hopping means that a channel used by a device for ranging (that is, sending and/or receiving a ranging signal) is switched from one channel to another channel, and channels before and after switching correspond to different carrier frequencies. For example, the first device and the second device switch from the at least one first channel to at least one second channel. The at least one first channel and the at least one second channel correspond to different carrier frequencies.

If a quantity of frequency hopping times is 1, the first device and the second device directly switch from the at least one first channel to the at least one second channel. If the quantity of frequency hopping times is greater than 1, the first device and the second device switch from the at least one first channel to the at least one second channel after a plurality times of channel switching. For example, the first device and the second device switch from the at least one first channel to at least one third channel, and then switch from the at least one third channel to the at least one second channel.

In embodiments of this application, the first device and the second device each perform frequency hopping based on the same frequency hopping parameter, so that the first device and the second device can perform frequency hopping synchronously. For example, when the first device switches from the at least one first channel to the at least one second channel, the second device also switches from the at least one first channel to the at least one second channel.

Frequency hopping in embodiments of this application may be radio frequency (RF) frequency hopping, digital frequency hopping, or frequency hopping based on a phase-locked loop (PLL) circuit. This is not limited. Radio frequency hopping or frequency hopping based on the PLL circuit is changing a carrier frequency of a local oscillator signal of a radio frequency channel to switch an operating channel of the device. This frequency hopping manner takes long time, and is usually at a millisecond level (for example, 2 ms to 3 ms). Digital frequency hopping takes short time, and is usually at a microsecond level (for example, 1 µs to 100 µs), and is implemented by modulating a signal on different frequencies/channels by using a baseband module, without changing a carrier frequency of a local oscillator signal.

Further, frequency hopping manners of the first device and the second device may be the same (for example, both are radio frequency hopping or digital frequency hopping), or may be different (for example, the first device uses radio frequency hopping, and the second device uses digital frequency hopping). This is not limited in this application.

During specific implementation, when a difference between a center frequency, of a next-hop channel, measured by a device (for example, the first device or the second device) and a center frequency of a current operating channel exceeds a maximum RF bandwidth supported by the device, the device performs radio frequency hopping; otherwise, the device may perform digital frequency hopping.

S203: The first device sends a third ranging signal and/or receives a fourth ranging signal over the at least one second channel, and correspondingly, the second device receives the third ranging signal and/or sends the fourth ranging signal over the at least one second channel.

It may be understood that the at least one second channel is a channel on which the first device and the second device are located after the first device and the second device each perform frequency hopping for at least one time. After switching to the at least one second channel, the first device and the second device perform signal measurement again over the at least one second channel. Similarly, after receiving the fourth ranging signal, the second device measures the fourth ranging signal, to obtain a fourth measurement quantity; and/or after receiving the third ranging signal, the first device measures the third ranging signal, to obtain a third measurement quantity.

Similarly, when the at least one second channel includes a plurality of channels, the at least one second channel may be considered as one channel group, for example, a second channel group. The second channel group and the first channel group correspond to different carrier frequencies.

For ease of description, in this specification, an operation in which the first device and the second device performs signal measurement over one channel may be considered as one signal measurement process, and an operation of performing signal measurement over different channels may be considered as different signal measurement processes (for example, S201 and S203 are two signal measurement processes).

After step S203, a computing device may calculate a distance between the first device and the second device by combining measurement quantities (the first measurement quantity and/or the second measurement quantity, and the third measurement quantity and/or the fourth measurement quantity), for example, a distance between the car key and the vehicle in the scenario shown in FIG. 1, obtained through two times of signal measurement. The computing device may be the first device, the second device, or another device. This is not limited in this application. In a possible design, the computing device may be the initiator in the first device and the second device. Correspondingly, if the responder receives and measures a ranging signal, the responder needs to feed back, to the initiator, a measurement quantity obtained through signal measurement.

In the foregoing solutions, the first device and the second device each perform frequency hopping for at least one time based on the same frequency hopping parameter, to synchronously perform signal measurement over different channels for a plurality of times in a preset order. This further implements technical effect of performing measurement by combining large-bandwidth signals of a plurality of channels (a bandwidth of signal measurement is total bandwidths of the at least one first channel and the at least one second channel), and improves ranging resolution and ranging accuracy.

It should be noted that the foregoing uses an example in which the first device and the second device perform two signal measurement processes. In a specific implementation process, the first device and the second device may further perform frequency hopping for more times, to perform signal measurement processes over more channels. Finally, the computing device may determine the distance between the first device and the second device by combining measurement quantities obtained in all signal measurement processes. This further improves ranging resolution and ranging precision.

In addition, during actual application, a quantity of devices that perform ranging interaction (which is also referred to as measurement interaction) with a same device is not limited to 1 (for example, a third device further performs ranging interaction with the first device). For example, in the scenario shown in FIG. 1, a plurality of positioning stations may simultaneously interact with the car key, to measure a distance between each positioning station and the vehicle key, so as to determine a location of the car key relative to the vehicle based on the distance between each positioning station and the car key. When a plurality of devices simultaneously perform ranging interaction with the first device, for an interaction process between each device and the first device, refer to the foregoing interaction process between the first device and the second device. Details are not described herein again.

In a possible design, a ranging signal in embodiments of this application, for example, the first ranging signal, the second ranging signal, the third ranging signal, and/or the fourth ranging signal, is an orthogonal frequency division multiplexing (orthogonal frequency division multiplexing, OFDM) signal.

OFDM is also referred to as discrete multi-tone modulation (discrete multi-tone modulation, DMT), may be considered as a special example of multi-carrier transmission, and has a capability of high-rate transmission. OFDM uses a large quantity of closely adjacent orthogonal subcarriers (orthogonal subcarrier), and each subcarrier uses a conventional modulation scheme for modulation at a low symbol rate. OFDM may be considered as a combination of modulation and multiplexing technologies.

In embodiments of this application, the OFDM signal may include one or more of the following signals: a channel state information reference signal (channel state information reference signal, CSI-RS), a sounding reference signal (sounding reference signal, SRS), a positioning reference signal (positioning reference signal, PRS), a synchronization signal, and the like.

The CSI-RS is a channel state information reference signal sent, in a communication domain, by the G node in the communication domain, and is used by another node to measure a characteristic of a transmission channel from the G node to the another node. The SRS is a channel sounding signal that is sent by another node (T node) and that is received by the G node in the communication domain, and is used by the G node to measure a characteristic of a transmission channel from the another node to the G node. The PRS is another OFDM modulation-based positioning reference signal designed for ranging. The synchronization signal may be a signal, for example, a first training signal (first training signal, FTS) and/or a second training signal (second training signal, STS), used for time and frequency synchronization in a wireless short-range communication system (for example, a vehicle-mounted wireless short-range communication system, specifically, the sparklink basic (sparklink basic, SLB) standard). It may be understood that, in the wireless short-range communication system, synchronization signals appear in pairs, that is, two synchronization signals are a group of synchronization signals. In the group of synchronization signals, an OFDM symbol that first appears in time domain is referred to as an FTS, and an OFDM symbol that appears later in time domain is referred to as an STS.

In the wireless short-range communication system, the OFDM signal may be used as a communication and ranging signal. An OFDM signal whose physical bandwidth is approximately 20 MHz is referred to as a carrier (a channel for sending a carrier OFDM signal is referred to as a carrier channel), and a center frequency channel number (namely, a direct current subcarrier) of the 20 MHz OFDM signal is referred to as a carrier frequency. In other words, one carrier includes 39 continuous subcarriers, and the 39 subcarriers are sequentially numbered #0, #1, ..., and #38 in ascending order of corresponding frequencies. A subcarrier #19 is a direct current (DC) subcarrier, and the other 38 subcarriers other than the DC subcarrier are referred to as valid subcarriers. The G node and the T node may operate on a plurality of carrier channels, and the plurality of carrier channels form one carrier channel group (corresponding to one channel group). For ease of description, the carrier channel is referred to as a channel for short in embodiments of this application.

OFDM frequency hopping is defined as that a DC subcarrier of an OFDM symbol is switched from a center frequency channel number of a channel to a center frequency channel number of another channel. For switching of single-carrier frequency hopping, it means that a DC subcarrier is switched from a channel to another channel. For switching of multi-carrier frequency hopping, it means that a channel group corresponding to the plurality of carriers is switched to another channel group.

Correspondingly, when the at least one first channel and the at least one second channel each include one channel, the first device and the second device switching from the at least one first channel to the at least one second channel is switching of single-carrier frequency hopping (or switching of a single channel). For example, the first device and the second device originally operate on a channel 1, and switch to a channel 2 after at least one time of frequency hopping. When the at least one first channel and the at least one second channel each include a plurality of channels, the first device and the second device switching from the at least one first channel to the at least one second channel is switching of multi-carrier frequency hopping (or switching of a plurality of channels or switching of a channel group). For example, the first device and the second device originally operate on channels 1 to 4, and switch to channels 5 to 8 after at least one time of frequency hopping.

Because the OFDM signal is transmitted via a plurality of subcarriers, a bandwidth supported by the OFDM signal is usually large (for example, greater than or equal to 20 MHz), operating bandwidths of different devices may be different, and frequency hopping stable duration may also be different. Consequently, frequency hopping in a broadband system is difficult. Specifically, frequency hopping parameters of different devices differ greatly, and frequency hopping is difficult to be synchronized without a synchronization protocol.

In embodiments of this application, during ranging, the first device and the second device perform frequency hopping based on a same frequency hopping parameter, so that the first device and the second device synchronously perform frequency hopping. This further implements, through frequency hopping, technical effect of performing measurement by combining large-bandwidth signals of a plurality of channels, and improves ranging resolution and ranging accuracy.

In a possible design, the frequency hopping parameter may include one or more of the following:

### 1. First frequency hopping stable duration (represented by T_{RF})

It may be understood that the frequency hopping stable duration is duration of a stable state by a device when performing frequency hopping, that is, duration from a moment at which the device performs frequency hopping to a moment at which the device reaches the stable state. The device that reaches the stable state can send and/or receive a ranging signal, or perform a clear channel assessment operation before sending the ranging signal. Duration that the first device spends in reaching the stable state when performing frequency hopping is frequency hopping stable duration of the first device, and duration that the second device spends in reaching the stable state when performing frequency hopping is frequency hopping stable duration of the second device.

It should be noted that, when the device performs RF frequency hopping, the stable duration of the device includes stable duration of an RF channel and some other operations (for example, a baseband configuration and refreshing of a register configuration) after the RF channel is stable. Because the frequency hopping stable duration occupies a large part of the stable duration of the device, the "stable duration of the device" and the "frequency hopping stable duration" are considered as the same in embodiments of this application.

The first frequency hopping stable duration may be understood as duration that both the first device and the second device spend in reaching the stable state when the first device and the second device that are in a communication connection perform frequency hopping. The first frequency hopping stable duration is greater than or equal to the frequency hopping stable duration of the first device, and the first frequency hopping stable duration is greater than or equal to the frequency hopping stable duration of the second device. In other words, the first device or the second device may reach the stable state before the first frequency hopping stable duration expires.

Optionally, the first frequency hopping stable duration is a larger value of the frequency hopping stable duration (represented by T_{RF,1}) of the first device and the frequency hopping stable duration (represented by T_{RF,2}) of the second device, that is, *T_{RF}=max*{*T_{RF,1},T_{RF,2}*}.

It may be understood that when a plurality of devices (for example, one primary node and a plurality of secondary nodes) participate in frequency hopping measurement, T_{RF} is a maximum value of frequency hopping stable duration of the plurality of devices, that is, T_{RF}=max{T_{RF,1}, T_{RF,2}, T_{RF,3}, ...}.

Optionally, T_{RF} may be indicated by 16 bits (bits), a change step may be 0.5 µs (that is, corresponding duration changes 0.5 µs each time a value of T_{RF} changes 1 bit), and an indication range is from 0.5 µs to 32.8 ms.

Optionally, when a device (the first device or the second device) performs frequency hopping in different frequency bands, duration spent in reaching the stable state may be different, and the first frequency hopping stable duration may be different. For example, the at least one channel belongs to a first frequency band, that is, when the first device performs frequency hopping in the first frequency band for at least one time, the first frequency hopping stable duration is first duration; or the at least one channel belongs to a second frequency band, that is, when the first device performs frequency hopping in the second frequency band for at least one time, the first frequency hopping stable duration is second duration. The first frequency band is different from the second frequency band, and the first duration is different from the second duration.

It should be noted that different frequency bands do not overlap in frequency domain. Further, each frequency band in different frequency bands may be used to divide a channel or a channel group. Therefore, different frequency bands cannot overlap.

It may be understood that the frequency band described in this specification is a large frequency range, and each frequency band may be divided into a plurality of channels or channel groups. For example, T_{RF,5.1GHz} and T_{RF,5.8Ghz} respectively indicate duration spent in reaching the stable state when frequency hopping is performed in a 5.1 GHz frequency band and duration spent in reaching the stable state when frequency hopping is performed in a 5.8 GHz frequency band. A frequency range of the 5.1 GHz frequency band is, for example, from 5150 MHz to 5350 MHz (the frequency range is an approximate value, and may be actually different), and a frequency range of the 5.8 GHz frequency band is, for example, from 5725 MHz to 5850 MHz (the frequency range is an approximate value, and may be actually different).

When the device performs frequency hopping in different frequency bands, whether the first frequency hopping stable duration is different may be determined based on whether clear channel assessment needs to be performed on a channel (channel group) after frequency hopping.

For example, <Technical Requirements for Interference Avoidance of Radio Transmitter Devices in 2400 MHz, 5100 MHz, and 5800 MHz Frequency Bands> stipulates that the device needs to perform clear channel assessment before transmission in the 5100 MHz frequency band (5.1 GHz frequency band) and the 2400 MHz frequency band (2.4 GHz frequency band). <Directory and Technical Requirements for Micro-Power Short-Range Radio Transmitter Devices> stipulates that in 5725 MHz to 5850 MHz frequency bands (5.8 GHz frequency band) radio transmission may be performed in a micro-power short-range manner, that is, the device may directly send a ranging signal without clear channel assessment. When frequency hopping needs to be performed in different frequency bands, stable duration of the first device during frequency hopping depends on performing clear channel assessment or directly transmitting the ranging signal, that is, frequency hopping stable duration in which clear channel assessment needs to be performed is less than stable duration in which the ranging signal needs to be directly transmitted. When the channel 1 after frequency hopping is in a frequency band (for example, the 5.8 GHz frequency band) in which the ranging signal can be directly sent, the frequency hopping stable duration *T*_{*RF*,5.8*G*} may be greater than the stable duration *T_{RF,5.1G}* for hopping to the channel 2 (for example, in the 5.1 GHz frequency band) on which clear channel assessment needs to be performed, for example, *T*_{*RF*,5.8}*_{G}=2*ms, and *T*_{*RF*,5.1g} = 1 ms.

In another description manner, when the device performs frequency hopping over different channels (groups), the frequency hopping stable duration of the device may be different. Similarly, when the device performs frequency hopping on different channels (groups), whether the first frequency hopping stable duration is different may be determined based on whether clear channel assessment needs to be performed on a channel (group) after frequency hopping.

For example, when clear channel assessment needs to be performed on a channel (group) on which the device is located after frequency hopping, the first device configures a frequency hopping stable duration parameter based on the frequency hopping stable duration *T*_{*Rf,*1}; otherwise, the first device configures the frequency hopping stable duration parameter based on the frequency hopping stable duration *T*_{*RF,*2}*,* where *T*_{*RF,*1} ≤ *T*_{*RF,*2}*.*

During specific implementation, a first maximum LBT window period may indicate whether clear channel assessment needs to be performed on a channel (group). For example, a maximum LBT window period of the 5.8 GHz frequency band is set to 0, to indicate that clear channel assessment does not need to be performed over a channel (group) included in the 5.8 GHz frequency band.

Different first frequency hopping stable duration is used for different operations (for example, clear channel assessment or transmission of the ranging signal) performed after frequency hopping, to reduce frequency hopping waiting duration of the device, improve frequency hopping ranging efficiency, and reduce power consumption.

In a possible design, the first frequency hopping stable duration includes duration that the device spends in reaching the stable state when performing frequency hopping in each frequency band (channel or channel group). For example, a specific form of the first frequency hopping stable duration may be an array. Each element in the array corresponds to frequency hopping stable duration of the device in a frequency band (channel or channel group), and different elements correspond to frequency hopping stable duration of the device in different frequency bands (channels or channel groups).

Optionally, duration that the device spends in reaching the stable state when performing frequency hopping in different frequency bands (channels or channel groups) may be different, and the first frequency hopping stable duration may be a maximum value of duration that the device spends in reaching the stable state when performing frequency hopping in the frequency bands (channels or channel groups).

In this way, it can be ensured that the device reaches the stable state when the first frequency hopping stable duration ends regardless of a frequency band (channel or channel group) in which the device performs frequency hopping. In addition, this can reduce an amount of information required for transmitting the first frequency hopping stable duration, and save system resources.

T_{RF} is set, so that statuses of the first device and the second device may be synchronized (for example, then, synchronously entering an LBT phase) during frequency hopping.

### 2. First maximum LBT window period (represented by T_{LBT,max})

It may be understood that, after the first device and the second device switch from a channel (or channel group) to another channel (or channel group) during frequency hopping, if the another channel (or channel group) is a contention-based channel (or channel group), listen before talk (listen before talk, LBT), clear channel assessment (clear channel assessment, CCA), or carrier-sense multiple access needs to be performed, to listen to a busy/idle state of a switched channel (or channel group). In this way, when the channel (or channel group) is idle, the channel (or channel group) is accessed, and the ranging signal starts to be sent and/or received.

It may be understood that LBT, CCA, carrier-sense multiple access, and the like have a same meaning, and all indicate a meaning of listening to a busy/idle state of a channel. For ease of description, the following mainly uses "clear channel assessment" as an example for description. Related terms may be replaced with each other. For example, LBT may be replaced with CCA.

Time (represented by T_{LBT}) in which the device (for example, the first device or the second device) performs clear channel assessment depends on a busy/idle state of a listened channel (or channel group). In other words, when the channel (or channel group) is busy, the device continues to listen to the channel (or channel group). When the channel (or channel group) is idle, the device accesses the channel and starts to send the ranging signal.

The first maximum LBT window period, namely, *T_{LBT,max},* indicates a maximum value of pre-configured *T_{LBT}.* Therefore, when a currently listened channel (or channel group) is busy and time in which clear channel assessment is performed reaches *T_{LBT,max},* the first device and/or the second device stops performing clear channel assessment on the listened channel (or channel group), and continues to perform frequency hopping, to switch to another channel (or channel group), and perform clear channel assessment on the another channel (or channel group).

Optionally, T_{LBT,max} is configured by a primary node (G node) in a communication domain in which the first device and the second device are located.

For example, when the first device is the primary node, the first maximum LBT window period is configured by the first device. The scenario shown in FIG. 1 is used as an example. If the car key is the primary node, *T_{LBT,max}* may be configured by the car key and notified to each positioning station.

Optionally, the first maximum LBT window period is greater than or equal to a preset value, and the preset value is, for example, 25 µs. For example, *T_{LBT,max}* =3 ms (close to *T_{RF}*).

During specific implementation, *T_{LBT,max}* may be indicated by 16 bits (bit), a change step may be 1 µs (that is, corresponding duration changes 1 µs each time a value of *T_{LBT,max}* changes 1 bit), and an indication range is from 1 µs to 65.5 ms.

*T_{LBT,max}* is set, so that it can be ensured that when a channel is busy for a long time, the first device and the second device synchronously switch to a next-hop channel when *T_{LBT,max}* ends. This can avoid repeated clear channel assessment due to long-time contention for a channel, save resources, reduce device power consumption, and improve frequency hopping measurement efficiency.

### 3. First frequency hopping pattern (pattern)

The first frequency hopping pattern indicates a frequency hopping order of the first device and the second device, and the first frequency hopping pattern includes channel number information of the at least one first channel and channel number information of the at least one second channel.

Optionally, the first frequency hopping pattern includes a plurality of pieces of channel number information that are sequentially arranged, and the frequency hopping order of the first device and the second device may be indicated based on an arrangement order of the plurality of pieces of channel number information.

**Table 1**

| Channel number | Carrier center frequency (MHz) |
|---|---|
| 41 | 5159.84 |
| 125 | 5180 |
| 209 | 5200.16 |
| 291 | 5219.84 |
| 375 | 5240 |
| 459 | 5260.16 |
| 541 | 5279.84 |
| 625 | 5300 |
| 709 | 5320.16 |
| 791 | 5339.84 |

For example, Table 1 is a channel number of a 20 MHz carrier and a corresponding carrier center frequency. The first frequency hopping pattern may be [41, 125, 209, ..., 791], and the frequency hopping sequence of the first device and the second device is: a channel 41, a channel 125, a channel 209, ..., and a channel 791.

Optionally, when frequency hopping is multi-carrier switching (namely, channel group switching), the first frequency hopping pattern may indicate channel number information of a channel at a preset location in each channel group, for example, channel number information of a channel with a lowest frequency or a highest frequency in each channel group. For example, if the frequency hopping order of the first device and the second device is: a channel group 1 (including three channels whose channel numbers are respectively a, b, and c), a channel group 2 (including three channels whose channel numbers are respectively d, e, and f), and a channel group 3 (including three channels whose channel numbers are respectively g, h, and i), the first frequency hopping pattern may be represented as [channel number a, channel number d, channel number g]. In this way, an amount of information required for transmitting the first frequency hopping pattern can be reduced, and system resources can be saved. Table 1 is still used as an example. A single channel group corresponds to a carrier with an 80 MHz bandwidth. If a channel number of an initial operating channel indicated by the first frequency hopping pattern is 41, a minimum channel number corresponding to a next-hop operating channel is 291.

The first frequency hopping pattern is set, so that it can be ensured that the first device and the second device perform frequency hopping based on the same frequency hopping order. This ensures that both ranging parties perform frequency hopping synchronously.

It should be understood that the foregoing three frequency hopping parameters are merely examples, and are not limited thereto during actual application.

In a possible design, a frequency hopping switching duration *T*₀ *= T*_{RF} *+ T_{LBT}.* In other words, after starting to perform frequency hopping, the first device and/or the second device needs to wait for *T*₀ to send and/or receive the ranging signal on a switched channel (or channel group).

An example in which the first device performs frequency hopping for one time is used. The first device switches from the at least one first channel to the at least one second channel based on the first frequency hopping pattern; and perform first clear channel assessment after waiting for T_{RF1}. After T_{LBT1} duration of the first clear channel assessment, the first device determines that the at least one second channel is idle, and sends the third ranging signal and/or receives the fourth ranging signal over the at least one second channel, where *T_{LBT1} < T_{LBT,max}* A process in which the second device performs frequency hopping for one time is similar to that of the first device, and details are not described herein again.

An example in which the first device performs frequency hopping for two times is used. The first device switches from the at least one first channel to the at least one third channel based on the first frequency hopping pattern. The first device performs second clear channel assessment after waiting for the first frequency hopping stable duration *T_{RF2}*. After *T_{LBT2}* duration of the second clear channel assessment, the first device determines that a clear channel assessment result obtained in an LBT window corresponding to the second clear channel assessment is that the at least one third channel is not idle, where T_{LBT2} = T_{LBT,max}. After the LBT window, namely, T_{LBT2}, corresponding to the second clear channel assessment ends (that is, duration in which the first device performs clear channel assessment reaches T_{LBT,max}), the first device switches, from the at least one third channel to the at least one second channel based on the first frequency hopping pattern. The first device performs third clear channel assessment after waiting for the first frequency hopping stable duration T_{RF3}. After T_{LBT3} duration of the third clear channel assessment, the first device determines that the at least one second channel is idle, and sends the third ranging signal and/or receives the fourth ranging signal over the at least one second channel, where T_{LBT3} < T_{LBT,max} and T_{RF2} and T_{RF3} may be the same or different. A process in which the second device performs frequency hopping for two times is similar to that of the first device, and details are not described herein again.

It may be understood that if the at least one second channel includes a plurality of channels, the at least one second channel being idle includes that some or all second channels in the at least one second channel are idle. In other words, provided that one of the at least one second channel is idle, the first device and the second device may access the channel, and send and/or receive the ranging signal over the channel.

Optionally, each time after clear channel assessment is performed, the G node (for example, the first device) needs to resend a preamble, so that the T node (for example, the second device) re-synchronizes timing (timing) and a carrier frequency offset (CFO) with the G node. Therefore, a timing offset tᵣₑₛ and f_{CFO} are controlled within an acceptable threshold range.

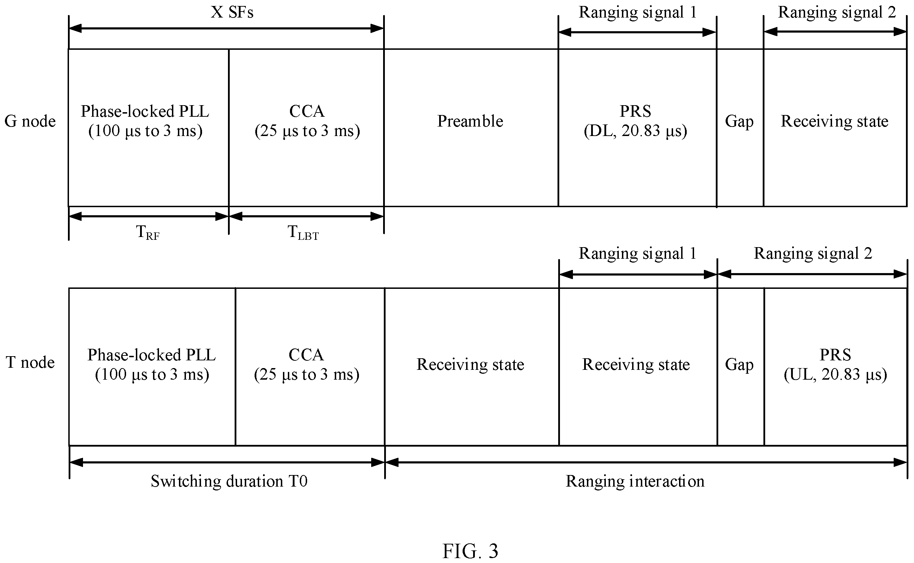

For example, FIG. 3 is a diagram of ranging signal interaction on a channel (group). For example, T_{RF} mainly includes stable duration of a phase-locked loop PLL. The G node and/or the T node can start clear channel assessment only after T_{RF} ends. In the LBT window, if the channel (group) indicates idle, the ranging signals are sent alternately (which is referred to as ranging interaction/measurement interaction). After an initiator (for example, the G node) sends a preamble signal and the ranging signal, a responder (for example, the T node) sends the ranging signal after a gap (gap). A process in which two sides each send the preamble signal and the ranging signal is one time of ranging interaction.

In a possible example, the G node and the T node may perform signal measurement according to the SLB technology. The ranging signal may include a positioning reference signal (PRS), and a length of a frame including the ranging signal is at least a length of a radio frame in SLB.

In a possible example, the G node serves as a transmitter of the preamble and a first radio frame, and CCA of the G node may start in Tₚᵣₑ before T_{RF} ends. A reason lies in that the T node changes to a stable receiving state at an end moment of T_{RF}. If the CCA indicates that the channel is idle, the G node may start to send the preamble signal at the end moment of T_{RF}, to save time and improve ranging efficiency.

In a possible example, if the frequency hopping stable duration of the G node is less than the frequency hopping stable duration of the T node, the G node may be in a communication/sleep state before the T node reaches the stable state, and also reach the stable state at the end moment of T_{RF}, to fully use T_{RF} time resources.

In a possible design, the frequency hopping parameter is determined through negotiation between the first device and the second device. A negotiation process may include: The first device sends frequency hopping measurement information of the first device to the second device; and/or receives frequency hopping measurement information of the second device.

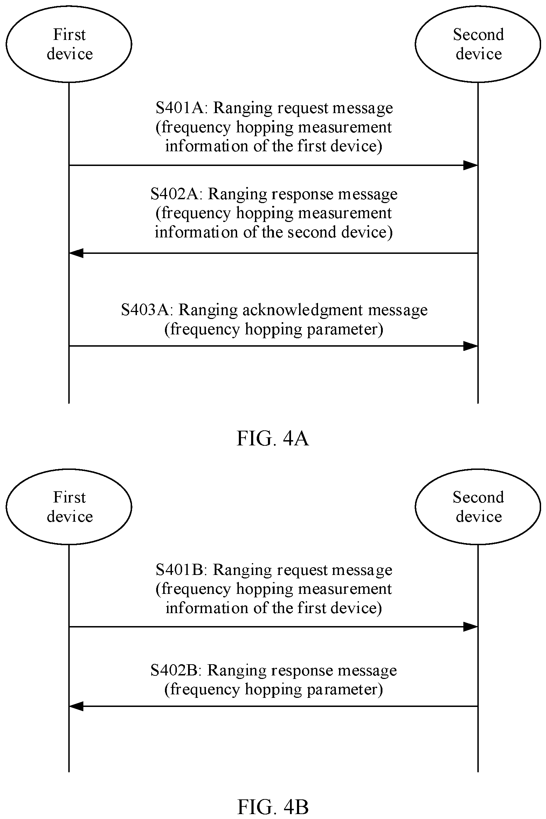

Example 1: The first device is an initiator, and the second device is a responder Refer to FIG. 4A. S401A: The first device sends a ranging request message to the second device, where the ranging request message includes the frequency hopping measurement information of the first device. S402A: The second device sends a ranging response message to the first device, where the ranging response message includes the frequency hopping measurement information of the second device. S403A: The first device determines the frequency hopping parameter based on the frequency hopping measurement information of the first device and the frequency hopping measurement information of the second device, and sends a ranging acknowledgment message to the second device, where the ranging acknowledgment message includes the frequency hopping parameter.

It may be understood that S403A is an optional step.

Example 2: The first device is an initiator, and the second device is a responder Refer to FIG. 4B. S401B: The first device sends a ranging request message to the second device, where the ranging request message includes the frequency hopping measurement information of the first device. S402B: The second device determines the frequency hopping parameter based on the frequency hopping measurement information of the first device and the frequency hopping measurement information of the second device, and sends a ranging response message to the first device, where the ranging response message includes the frequency hopping parameter.

The frequency hopping measurement information of the first device may include one or more of the following:

### (1) First information that indicates whether the first device allows channel overlapping

Specifically, whether the first device supports switching of multi-carrier (namely, channel group) frequency hopping.

The at least one first channel and the at least one second channel are used as an example. The at least one first channel and the at least one second channel each include a plurality of channels. In an overlapping case, some channels in the at least one first channel and the at least one second channel are the same. In a non-overlapping case, the at least one first channel and the at least one second channel do not have a same channel.

### (2) Second information that indicates a quantity Nₒᵥₑᵣₗₐₚ of overlapped channels allowed by the first device

Specifically, when the first device supports switching of multi-carrier frequency hopping, a quantity of overlapped channels between different channel groups cannot exceed *N*ₒᵥₑᵣₗₐₚ.

For example, for a plurality of carriers whose bandwidth is B, a carrier overlapping range is B-20 MHz to B MHz, and a change step is 20 MHz (that is, a corresponding carrier overlapping range changes by a 20 MHz bandwidth each time one channel overlaps).

For a single carrier with a 20 MHz bandwidth, channel overlapping is not allowed (*N*ₒᵥₑᵣₗₐₚ = 0).

For a multi-carrier with a 40 MHz bandwidth, only half of the bandwidth (20 MHz) is allowed to overlap (*N*ₒᵥₑᵣₗₐₚ = 1).

For a multi-carrier with an 80 MHz bandwidth, only bandwidths of 20 MHz to 60 MHz are allowed to overlap (N*ₒᵥₑᵣₗₐₚ*=1, 2, or 3).

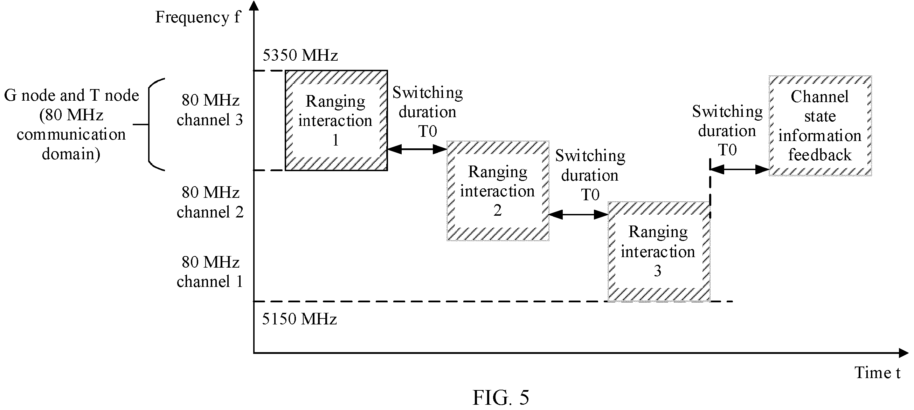

For example, FIG. 5 is a diagram of possible frequency hopping according to an embodiment of this application. In the scenario shown in FIG. 5, 20 MHz bandwidths in two adjacent channel groups overlap with each other (*N*ₒᵥₑᵣₗₐₚ = 1).

### (3) Third information that indicates a second frequency hopping pattern expected by the first device

For example, the first device may determine the second frequency hopping pattern in advance based on frequency hopping capability information of the first device, and use the second frequency hopping pattern as the second frequency hopping pattern expected by the first device.

### (4) Fourth information that indicates the frequency hopping stable duration of the first device

In other words, duration from a moment at which the first device performs frequency hopping to a moment at which the first device reaches the stable state.

### (5) Fifth information that indicates a second maximum LBT window period expected by the first device

The frequency hopping measurement information of the second device may include one or more of the following:
(1) sixth information that indicates whether the second device allows channel overlapping, where for details, refer to descriptions about the first information;
(2) seventh information that indicates a quantity of overlapped channels allowed by the second device, where for details, refer to descriptions about the second information;
(3) eighth information that indicates a third frequency hopping pattern expected by the second device, where for details, refer to descriptions about the third information;
(4) ninth information that indicates frequency hopping stable duration of the second device, where for details, refer to descriptions about the fourth information; and
(5) tenth information that indicates a third maximum LBT window period expected by the second device.

It should be understood that the foregoing several types of frequency hopping measurement information is merely an example rather than a limitation, and actually, other information may be further included.

The following provides several examples in which the first device or the second device determines the frequency hopping parameter based on the frequency hopping measurement information of the first device and the frequency hopping measurement information of the second device.

Example 1: The first device or the second device determines the first frequency hopping pattern based on the first information, the second information, the sixth information, and the seventh information.

For example, when both the first device and the second device allow channel overlapping, there may be overlapped channels between channel groups corresponding to different frequency hopping locations in the first frequency hopping pattern.

For example, when both the first device and the second device allow channel overlapping, a quantity of overlapped channels in the first frequency hopping pattern cannot exceed a smaller value of the quantity of overlapped channels allowed by the first device and the quantity of overlapped channels allowed by the second device.

Example 2: The first device or the second device determines the frequency hopping stable duration based on the fourth information and the ninth information.

For example, the first frequency hopping stable duration is a larger value of the frequency hopping stable duration of the first device and the frequency hopping stable duration of the second device.

Example 3: The first device or the second device determines the first maximum LBT window period based on the fifth information and/or the tenth information.

For example, when the first device is the G node, the first maximum LBT window period is the second maximum LBT window period expected by the first device.

For example, when the second device is the G node, the first maximum LBT window period is the third maximum LBT window period expected by the second device.

For example, the first maximum LBT window period is a larger value or a smaller value of the second maximum LBT window period and the third maximum LBT window period.

In the foregoing design manner, the first device and the second device determine the frequency hopping parameter through negotiation, so that the determined frequency hopping parameter can be well supported by the first device and the second device. This ensures a synchronization status (channel switching, waiting for same device stable duration, synchronous ending of a clear channel assessment period, and the like) of frequency hopping ranging between the first device and the second device, and enhances ranging reliability.

In a possible design, the first device determines the frequency hopping measurement information of the first device. The frequency hopping measurement information of the first device is determined based on the frequency hopping capability information of the first device, frequency hopping capability information of the second device, or pre-configured or pre-defined frequency hopping capability information. The second device determines the frequency hopping measurement information of the second device. The frequency hopping measurement information of the second device is determined based on the frequency hopping capability information of the first device, the frequency hopping capability information of the second device, or the pre-configured or pre-defined frequency hopping capability information.

In a possible implementation, the frequency hopping capability information of the first device and the frequency hopping capability information of the second device is pre-configured or pre-defined. For example, frequency hopping capability information of each device in a same communication domain is pre-configured and notified to another device in the communication domain, or frequency hopping capability information of devices in a same communication domain is configured to a same value. Therefore, the first device may directly determine the frequency hopping measurement information of the first device based on the pre-configured or pre-defined frequency hopping capability information, and the second device may directly determine the frequency hopping measurement information of the second device based on the pre-configured or pre-defined frequency hopping capability information. In this way, this can improve efficiency of obtaining the frequency hopping capability information of each other by the first device and the second device, to improve ranging efficiency.

In another possible implementation, before the first device and the second device negotiate the frequency hopping parameter (that is, before the frequency hopping measurement information is exchanged), the first device and the second device may alternatively exchange the frequency hopping capability information, so that the first device and/or the second device may determine the frequency hopping measurement information of the first device and/or the second device based on the frequency hopping capability information of the first device and the second device. For example, the first device sends the frequency hopping capability information of the first device to the second device, and the second device receives the frequency hopping capability information of the first device, so that the second device may determine the frequency hopping measurement information of the second device based on the frequency hopping capability information of the first device and the frequency hopping capability information of the second device; and/or the second device sends the frequency hopping capability information of the second device to the first device, and the first device receives the frequency hopping capability information of the second device, so that the first device may determine the frequency hopping measurement information of the first device based on the frequency hopping capability information of the first device and the frequency hopping capability information of the second device. In this way, it can be ensured that the first device and the second device accurately obtain the frequency hopping capability information of each other, to improve applicability of the solution.

During specific implementation, the first device and the second device may exchange the frequency hopping capability information in an associated state or an unassociated state. In the association state, for example, when the first device and the second device establish a reliable connection after completing operations such as authentication and association, the first device and the second device may exchange the frequency hopping capability information based on the ranging request message and the ranging response message. In the unassociated state, for example, when the first device and the second device do not perform an association operation or establish a connection, the first device and the second device may broadcast the frequency hopping capability information of the first device and the second device via a system broadcast message, so that a device (including the second device) in a preset range of the first device may receive the frequency hopping capability information, broadcast by the first device, of the first device. In addition, the frequency hopping parameter may be broadcast via the system broadcast message, so that the two devices complete ranging in the unassociated state.

The frequency hopping capability information of the first device may include one or more of the following:
(1) Whether the first device supports frequency hopping
(2) Information about a frequency band that is supported by the first device and that is used for frequency hopping
   For example, an available frequency band that is supported and that is used for frequency hopping ranging is included. For example, when the first device supports the 5.1 GHz frequency band, a frequency hopping ranging capability in a 5150 MHz to 5350 MHz frequency band may be indicated. When the first device supports the 5.8 GHz frequency band, a frequency hopping ranging capability in a 5725 MHz to 5850 MHz frequency band may be indicated.
(3) Maximum bandwidth that is supported by the first device and that is used to send and/or receive a ranging signal
   In other words, the maximum bandwidth is an operating bandwidth of the first device, for example, 20 MHz to 200 MHz. A change step is 20 MHz, and may be specifically determined by a maximum bandwidth of an RF chain of the first device.
(4) Preset stable duration in which the first device performs frequency hopping

The duration is defined as duration that an entire device (including the RF chain and a baseband processing unit) spends in reaching a stable sending state or a stable receiving state when the RF chain with the maximum bandwidth that is supported by the first device and that is used to send and/or receive the ranging signal needs to switch an operating frequency channel number The value may be determined based on a design parameter and/or a test parameter of the first device.

It may be understood that the frequency hopping stable duration of the first device that is indicated by the fourth information may be the same as or different from the preset stable duration in which the first device performs frequency hopping herein.

For example, because a temperature of the device changes, a temperature of the first device in a frequency hopping capability information exchange phase is different from a temperature of the first device in a frequency hopping parameter negotiation phase. Therefore, the preset stable duration that is obtained by the first device in the frequency hopping capability information exchange phase and in which the first device performs frequency hopping may be different from the preset stable duration that is obtained in the frequency hopping parameter negotiation phase and in which the first device performs frequency hopping.

For example, because an operating frequency band of the device changes, an operating frequency band of the first device in the frequency hopping capability information exchange phase is different from an operating frequency band of the first device in the frequency hopping parameter negotiation phase. Therefore, the preset stable duration that is obtained by the first device in the frequency hopping capability information exchange phase and in which the first device performs frequency hopping may be different from the preset stable duration that is obtained in the frequency hopping parameter negotiation phase and in which the first device performs frequency hopping.

(5) Whether the preset stable duration in which the first device performs frequency hopping is different in different frequency bands
For example, for the 5.1 GHz frequency band, the stable duration is 1 ms, and for the 5.8 GHz frequency band, the stable duration is 2 ms. A reason lies in that the first device needs to perform clear channel assessment in 5.1 GHz, but does not need to perform clear channel assessment in 5.8 GHz when sending is performed at micro-power. When the first device needs to perform a clear channel assessment operation on a channel, the first device may use short stable duration to perform frequency hopping for switching to the channel. Otherwise, when the first device directly transmits the ranging signal over a channel without performing a clear channel assessment operation, the first device needs to use long stable duration to perform frequency hopping for switching to the channel.

Similarly, the frequency hopping capability information of the second device includes one or more of the following:
(1) whether the second device supports frequency hopping;
(2) information about a frequency band that is supported by the second device and that is used for frequency hopping;
(3) a maximum bandwidth that is supported by the second device and that is used to send and/or receive a ranging signal;
(4) preset stable duration in which the second device performs frequency hopping; and
(5) whether the preset stable duration in which the second device performs frequency hopping is different in different frequency bands.

For the frequency hopping capability information of the second device, refer to detailed descriptions of the frequency hopping capability information of the first device. Details are not described herein again.

An example in which the first device determines the frequency hopping measurement information of the first device based on the frequency hopping capability information of the first device and the frequency hopping capability information of the second device is used. When both the first device and the second device support frequency hopping, the first device may determine the first information (that is, whether the first device allows channel overlapping), the second information (namely, the quantity of overlapped channels allowed by the first device), the third information (namely, the second frequency hopping pattern expected by the first device), and/or the like based on the information about the frequency band that is supported by the first device and that is used for frequency hopping, the information about the frequency band that is supported by the second device and that is used for frequency hopping, the maximum bandwidth that is supported by the first device and that is used to send and/or receive the ranging signal, the maximum bandwidth that is supported by the second device and that is used to send and/or receive the ranging signal, and the like.

In the foregoing design manner, it can be ensured that the frequency hopping measurement information of the first device in the negotiation process can be supported by a frequency hopping capability of the first device, and the frequency hopping measurement information of the second device can be supported by a frequency hopping capability of the second device, to improve reliability of the solution.

In a possible design, the first frequency hopping pattern further includes channel number information of an initial operating channel, and a last-hop channel indicated by the first frequency hopping pattern is the initial operating channel. The method further includes: The first device and the second device start to perform frequency hopping from the initial operating channel for one or more times in the frequency hopping order indicated by the first frequency hopping pattern, and return to the initial operating channel through frequency hopping for the last time.

Optionally, the initial operating channel is a channel (or channel group) with a highest frequency in the first frequency hopping pattern.

For example, FIG. 5 is a diagram of possible frequency hopping according to an embodiment of this application. In FIG. 5, the G node and the T node sequentially perform ranging interaction on a channel 3, a channel 2, and a channel 1 through frequency hopping, and return to the channel 3 through frequency hopping for the last time. The responder in the G node and the T node feeds back channel state information to the initiator over the channel 3.

In the design manner, the device starts to perform frequency hopping from the initial operating channel, and returns to the initial operating channel through frequency hopping for the last time. In this way, it can be ensured that the device performs ranging over different channels in the signal measurement process, to implement large-bandwidth measurement effect. In addition, it can be ensured that the device returns to the initial operating channel after the ranging is completed, to ensure subsequent communication performance of the device.

In a possible design, an operating bandwidth of the device that serves as the G node in the first device and the second device is greater than an operating bandwidth of the device that serves as the T node. In this case, the frequency hopping switching duration *T*₀ may depend only on a frequency hopping capability of the T node, and is irrelevant to the G node.

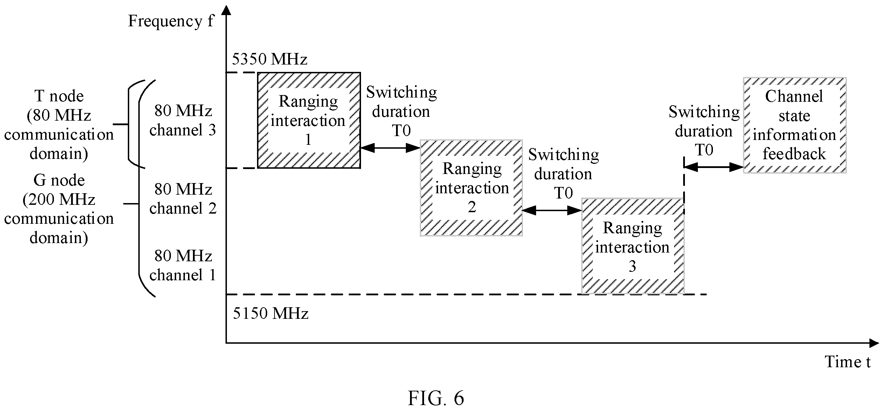

For example, FIG. 6 is a diagram of other possible frequency hopping according to an embodiment of this application. In FIG. 6, the G node and the T node sequentially perform ranging interaction on the channel 3, the channel 2, and the channel 1 through frequency hopping, and return to the channel 3 through frequency hopping for the last time. An operating bandwidth of the G node is 200 MHz, and an operating bandwidth of the T node is 80 MHz. After the G node and the T node complete negotiation of the frequency hopping parameter, the T node (80 MHz) needs to perform frequency hopping for at least two times to complete measurement of all 200 MHz bandwidths. The G node does not need to perform radio frequency hopping, and only needs to perform digital frequency hopping to complete ranging interaction with the T node. Frequency hopping switching duration T0 depends on a switching capability of the T node, and is irrelevant to the G node.

Because the G node continuously operates in a large bandwidth (for example, 200 MHz), availability of each small bandwidth (for example, 80 MHz) in the large bandwidth is ensured. On one hand, frequency switching efficiency of the G node can be ensured (because the G node does not need to perform RF frequency hopping). On the other hand, the T node does not need to perform clear channel assessment (because the channel is in an access period of the G node, an LBT failure does not exist). This can improve ranging interaction efficiency.

To better describe effect of the technical solutions of this application, the following enumerates a group of experimental data.

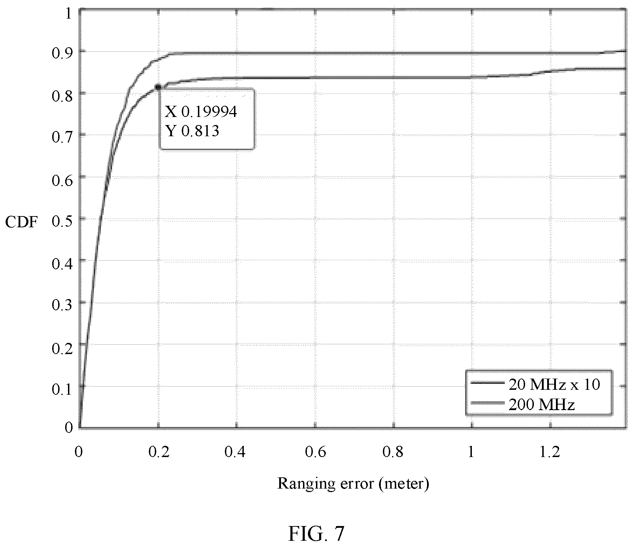

FIG. 7 is a diagram of a simulation result of frequency hopping ranging that is performed based on an OFDM signal with a 20 MHz bandwidth. The G node and the T node perform frequency hopping ranging via a 20 MHz single carrier and an OFDM symbol-based ranging signal. The OFDM signal (20 MHz) is used to perform switching and measurement on a plurality of carrier channels, and feed back channel state information (CSI), obtained through measurement via the carrier channels, in frequency domain, to coherently combine measurement results of the plurality of carriers. This enables two small-bandwidth devices with only a 20 MHz operating bandwidth to quickly measure a bandwidth of 200 MHz through frequency hopping measurement for a plurality of times, to achieve ranging performance of a large bandwidth close to 200 MHz, and reach precision at a level of 10 centimeters (CDF 80%). In the example provided in FIG. 7, "200 MHz" indicates a ranging cumulative distribution function (CDF) curve of a 200 MHz bandwidth channel measured for one time without frequency hopping, and "20 MHz x 10" indicates a CDF curve obtained by performing frequency hopping for 10 times by a G node and a T node each with a 20 MHz operating bandwidth to complete measurement of a 200 MHz bandwidth. A channel model during simulation is the 9-path Rayleigh fading model (that is, the model B of the 802.11ax channel model), and simulation is performed for 1000 times in total.

It should be understood that the implementations in embodiments of this application may be mutually combined to implement different technical effect.

The foregoing describes the methods provided in embodiments of this application with reference to the accompanying drawings. The following describes apparatuses provided in embodiments of this application with reference to the accompanying drawings.

Based on a same technical concept, an embodiment of this application provides a ranging apparatus. The apparatus includes modules/units/means configured to perform the methods performed by the first device and/or the second device in the foregoing method embodiments. The modules/units/means may be implemented by software, hardware, or hardware by executing corresponding software.

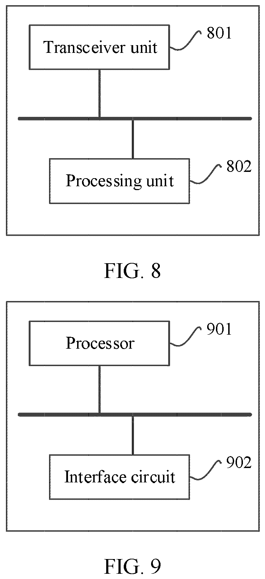

Refer to FIG. 8. For example, the apparatus may include a transceiver unit 801 and a processing unit 802.

When the apparatus is the first device or is located in the first device, the transceiver unit 801 is configured to send a first ranging signal and/or receive a second ranging signal over at least one first channel.

The processing unit 802 is configured to perform frequency hopping for at least one time based on a frequency hopping parameter.

The transceiver unit 801 is further configured to send a third ranging signal and/or receive a fourth ranging signal over at least one second channel.

When the apparatus is the second device or is located in the second device, the transceiver unit 801 is configured to receive a first ranging signal and/or send a second ranging signal over at least one first channel. The processing unit 802 is configured to perform frequency hopping for at least one time based on a frequency hopping parameter. The transceiver unit 801 is further configured to receive a third ranging signal and/or send a fourth ranging signal over at least one second channel.

It should be understood that all related content of the steps in the foregoing method embodiments may be cited in function descriptions of the corresponding functional modules. Details are not described herein.

During specific implementation, the apparatus may have a plurality of product forms. The following describes several possible product forms.

Refer to FIG. 9. An embodiment of this application further provides a ranging apparatus. The apparatus includes at least one processor 901 and an interface circuit 902. The interface circuit 902 is configured to: receive a signal from another apparatus other than the apparatus and send or receive the signal to the processor 901, or send a signal from the processor 901 to another communication apparatus other than the apparatus, and the processor 901 is configured to implement, by using a logic circuit or executing code instructions, the method performed by the first device or the second device.

It should be understood that the processor mentioned in embodiments of this application may be implemented by hardware or by software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It should be understood that, the memory mentioned in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (storage module) may be integrated into the processor.

It should be noted that the memory described in this specification aims to include but is not limited to these memories and any memory of another proper type.

Based on a same technical concept, an embodiment of this application further provides a computer-readable storage medium, including a program or instructions. When the program or the instructions are run on a computer, the method performed by the first device or the second device is performed.

Based on a same technical concept, an embodiment of this application further provides a computer program product including instructions. The computer program product stores the instructions, and when the computer program product runs on a computer, the method performed by the first device or the second device is performed.

Based on a same technical concept, an embodiment of this application further provides a ranging system, including the second device and the first device.

Based on a same technical concept, an embodiment of this application further provides a terminal device, including the second device or the first device. The terminal device may be a vehicle, an uncrewed aerial vehicle, a helicopter, an aircraft, a ship, an intelligent transportation device, an intelligent home device, or the like. A specific form of the terminal device is not limited in embodiments of this application.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

## Claims

1. A ranging method, comprising:
sending, by a first device, a first ranging signal and/or receiving a second ranging signal over at least one first channel;
performing, by the first device, frequency hopping for at least one time based on a frequency hopping parameter; and
sending, by the first device, a third ranging signal and/or receiving a fourth ranging signal over at least one second channel.

2. The method according to claim 1, wherein the first ranging signal, the second ranging signal, the third ranging signal, and/or the fourth ranging signal is an orthogonal frequency division multiplexing OFDM signal.

3. The method according to claim 2, wherein the OFDM signal comprises at least one of the following signals: a channel state information reference signal CSI-RS, a sounding reference signal SRS, a first training signal FTS, a second training signal STS, and a positioning reference signal PRS.

4. The method according to any one of claims 1 to 3, wherein the frequency hopping parameter comprises one or more of the following:
first frequency hopping stable duration;
a first maximum LBT window period; and
a first frequency hopping pattern that indicates a frequency hopping order of the first device and a second device, wherein the first frequency hopping pattern comprises channel number information of the at least one first channel and channel number information of the at least one second channel.

5. The method according to claim 4, wherein
the at least one channel belongs to a first frequency band, and the first frequency hopping stable duration is first duration; or
the at least one channel belongs to a second frequency band, and the first frequency hopping stable duration is second duration, wherein
the first frequency band is different from the second frequency band, the first frequency band and the second frequency band do not overlap in frequency domain, and the first duration is different from the second duration.

6. The method according to claim 4 or 5, wherein the first maximum LBT window period is configured by the first device.

7. The method according to any one of claims 4 to 6, wherein the first frequency hopping stable duration is a larger value of frequency hopping stable duration of the first device and frequency hopping stable duration of the second device, and the frequency hopping stable duration is duration of a stable state by a device when performing frequency hopping

8. The method according to any one of claims 4 to 7, wherein the first frequency hopping pattern is determined through negotiation between the first device and the second device.

9. The method according to any one of claims 4 to 8, wherein the at least one second channel comprises a plurality of channels, and the channel number information of the at least one second channel is channel number information of a channel with a lowest frequency or a highest frequency in the at least one second channel.

10. The method according to any one of claims 4 to 9, wherein the performing, by the first device, frequency hopping for at least one time based on a frequency hopping parameter comprises:
switching, by the first device, from the at least one first channel to the at least one second channel based on the first frequency hopping pattern; and
performing, by the first device, first clear channel assessment after waiting for the first frequency hopping stable duration; and
the sending, by the first device, a third ranging signal and/or receiving a fourth ranging signal over at least one second channel comprises:
when determining that the at least one second channel is idle, sending, by the first device, the third ranging signal and/or receiving the fourth ranging signal over the at least one second channel.

11. The method according to any one of claims 4 to 7, wherein the first frequency hopping pattern further comprises channel number information of at least one third channel;
the performing, by the first device, frequency hopping for at least one time based on a frequency hopping parameter comprises:
switching, by the first device, from the at least one first channel to the at least one third channel based on the first frequency hopping pattern;
performing, by the first device, second clear channel assessment after waiting for the first frequency hopping stable duration;
when determining that a clear channel assessment result obtained in an LBT window corresponding to the second clear channel assessment is that the at least one third channel is not idle, after the LBT window corresponding to the second clear channel assessment ends, switching, by the first device, from the at least one third channel to the at least one second channel based on the first frequency hopping pattern, wherein duration of the LBT window corresponding to the second clear channel assessment is equal to the first maximum LBT window period; and
performing, by the first device, third clear channel assessment after waiting for the first frequency hopping stable duration; and
the sending, by the first device, a third ranging signal and/or receiving a fourth ranging signal over at least one second channel comprises:
when determining that the at least one second channel is idle, sending, by the first device, the third ranging signal and/or receiving the fourth ranging signal over the at least one second channel.

12. The method according to any one of claims 4 to 11, wherein the method further comprises:
sending, by the first device, frequency hopping measurement information of the first device to the second device; and/or
receiving, by the first device, frequency hopping measurement information of the second device.

13. The method according to claim 12, wherein the frequency hopping measurement information of the first device comprises one or more of the following:
first information that indicates whether the first device allows channel overlapping;
second information that indicates a quantity of overlapped channels allowed by the first device;
third information that indicates a second frequency hopping pattern expected by the first device;
fourth information that indicates frequency hopping stable duration of the first device; and
fifth information that indicates a second maximum LBT window period expected by the first device; and
the frequency hopping measurement information of the second device comprises one or more of the following:
sixth information that indicates whether the second device allows channel overlapping;
seventh information that indicates a quantity of overlapped channels allowed by the second device;
eighth information that indicates a third frequency hopping pattern expected by the second device;
ninth information that indicates frequency hopping stable duration of the second device; and
tenth information that indicates a third maximum LBT window period expected by the second device.

14. The method according to claim 12 or 13, wherein the method further comprises:
determining, by the first device, the frequency hopping measurement information of the first device, wherein the frequency hopping measurement information is determined based on frequency hopping capability information of the first device, frequency hopping capability information of the second device, or pre-configured or pre-defined frequency hopping capability information.

15. The method according to claim 14, wherein the method further comprises:
sending, by the first device, the frequency hopping capability information of the first device to the second device; and/or
receiving, by the first device, the frequency hopping capability information of the second device.

16. The method according to claim 14 or 15, wherein the frequency hopping capability information of the first device comprises one or more of the following:
whether the first device supports frequency hopping;
information about a frequency band that is supported by the first device and that is used for frequency hopping;
a maximum bandwidth that is supported by the first device and that is used to send and/or receive a ranging signal;
preset stable duration in which the first device performs frequency hopping; and
whether the preset stable duration in which the first device performs frequency hopping is different in different frequency bands; and
the frequency hopping capability information of the second device comprises one or more of the following:
whether the second device supports frequency hopping;
information about a frequency band that is supported by the second device and that is used for frequency hopping;
a maximum bandwidth that is supported by the second device and that is used to send and/or receive a ranging signal;
preset stable duration in which the second device performs frequency hopping; and
whether the preset stable duration in which the second device performs frequency hopping is different in different frequency bands.

17. The method according to any one of claims 4 to 16, wherein the first frequency hopping pattern further comprises channel number information of an initial operating channel, and the method further comprises:
starting, by the first device, frequency hopping from the initial operating channel, wherein a last-hop channel indicated by the first frequency hopping pattern is the initial operating channel.

18. A ranging method, comprising:
receiving, by a second device, a first ranging signal and/or sending a second ranging signal over at least one first channel;
performing, by the second device, frequency hopping for at least one time based on a frequency hopping parameter; and
receiving, by the second device, a third ranging signal and/or sending a fourth ranging signal over at least one second channel.

19. A ranging apparatus, comprising:
a transceiver unit, configured to send a first ranging signal and/or receive a second ranging signal over at least one first channel; and
a processing unit, configured to perform frequency hopping for at least one time based on a frequency hopping parameter, wherein
the transceiver unit is further configured to send a third ranging signal and/or receive a fourth ranging signal over at least one second channel.

20. A ranging apparatus, comprising:
a transceiver unit, configured to receive a first ranging signal and/or send a second ranging signal over at least one first channel; and
a processing unit, configured to perform frequency hopping for at least one time based on a frequency hopping parameter, wherein
the transceiver unit is further configured to receive a third ranging signal and/or send a fourth ranging signal over at least one second channel.

21. A ranging apparatus, comprising at least one processor and an interface circuit, wherein
the interface circuit is configured to: receive a signal from another apparatus other than the apparatus and send or receive the signal to the processor, or send a signal from the processor to another apparatus other than the apparatus, and the processor is configured to implement the method according to any one of claims 1 to 17 or the method according to claim 18 by using a logic circuit or executing code instructions.

22. A computer-readable storage medium, wherein the storage medium stores a computer program or instructions, and when the computer program or the instructions are executed by a communication apparatus, the method according to any one of claims 1 to 17 or the method according to claim 18 is implemented.

23. A computer program product, wherein the computer program product stores instructions, when the computer program product runs on a computer, the computer is enabled to perform the method according to any one of claims 1 to 17 or the method according to claim 18.

24. A ranging system, comprising:
a first device, configured to perform the method according to any one of claims 1 to 17; and
a second device, configured to perform the method according to claim 18.
